(19)

Europäisches
Patentamt
European
Patent Office
Office européen
des brevets

(11) **EP 2 520 971 A1**

(12) **EUROPEAN PATENT APPLICATION**

(43) Date of publication:
   **07.11.2012 Bulletin 2012/45**

(51) Int Cl.:
   ***G02F 1/13363*** *(2006.01)*

(21) Application number: **11186653.9**

(22) Date of filing: **26.10.2011**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **02.05.2011 KR 20110041421**

(71) Applicant: **Samsung Display Co., Ltd.**
   **Yongin-City, Gyeonggi-Do (KR)**

(72) Inventors:
   • **Kim, Kwang-Hyun**
      **704-1402 Gyeonggi-do (KR)**

   • **Kim, Ji-Hoon**
      **337-1102 Gyeonggi-do (KR)**
   • **Park, Seung-Beom**
      **113-407 Seoul (KR)**
   • **Kim, Sang-Jae**
      **109-901 Gyeonggi-do (KR)**

(74) Representative: **Dr. Weitzel & Partner**
   **Patentanwälte**
   **Friedenstrasse 10**
   **89522 Heidenheim (DE)**

(54) **Liquid crystal display**

(57)   A (VA) liquid crystal display has: a liquid crystal layer (3) interposed between a first substrate (110) and a second substrate (210); the substrates (110,210) are disposed between a first polarizer (15) and a second polarizer (25); a color filter (230) is disposed on one of the two substrates (110); and a biaxial compensation film (22), with an in- plane phase retardation R0 from about 45nm to about 75nm and a thickness direction phase retardation Rth from about 250nm to about 310nm, is disposed between a polariser (25) and a substrate (210) to improve the contrast ratio. A film (12), with an in- plane phase retardation R0 from about -10nm to about 10nm and a thickness direction phase retardation Rth from about -10nm to about 10nm, which can be disposed between the first polariser (15) and the first substrate (110) on the other side does not contribute to the phase difference and may also be removed.

FIG. 8A

EP 2 520 971 A1

**(Cont. next page)**

# FIG. 11

**Description**

CROSS REFERENCE TO RELATED APPLICATION

This application claims priority from and the benefit of Korean Patent Application No. 10-2011-0041421, filed on May 2, 2011, which is hereby incorporated by reference for all purposes as if fully set forth herein.

BACKGROUND OF THE INVENTION

FIELD OF THE INVENTION
The present disclosure is directed to a liquid crystal display.
DISCUSSION OF THE BACKGROUND
A liquid crystal display includes a liquid crystal panel that displays images by using light from a backlight assembly disposed under the liquid crystal panel, with the backlight assembly providing the light to the liquid crystal panel.
The liquid crystal panel includes a first substrate with a thin film transistor and a pixel electrode, a second substrate facing the first substrate which includes a common electrode. A liquid crystal layer is interposed between the first substrate and the second substrate.
The liquid crystal in the liquid crystal layer may be operated in a vertical alignment (VA) mode by an electric field formed between the pixel electrode and the common electrode. If the electric field is not applied between the pixel electrode and the common electrode, the liquid crystal panel displays a black image, and if the electric field is applied between the pixel electrode and the common electrode, images of various grays are displayed.
If the electric field is applied between the pixel electrode and the common electrode, the liquid crystal in the liquid crystal layer is arranged with an angle of less than 90 degrees with respect to the pixel electrode or the common electrode, thereby displaying the image with a brightness that is gradually increased. In a case that the liquid crystals are arranged in the vertical direction, a black image having low luminance is displayed if the light is incident to the front side of the liquid crystal panel; however if the light is incident to the side of the liquid crystal panel, the luminance of the black image is high compared to the light being incident to the front side. This is due to the light passing through the side of the liquid crystal panel obliquely passes through the liquid crystal panel such that phase retardation is generated by the liquid crystal layer. On the contrary, light passing in the front side does not get affected by this effect. Further, light passing on side also causes other effects, such as scattering of the light that occurs if the light passes through the thin film transistor and the color filter, thereby causing the polarization state to be changed, with the change generating light leakage.
As described above, in the liquid crystal panel that is operated with the vertical alignment (VA) mode, the luminance of the black image is high, thereby causing the contrast ratio to be decreased.
The above information disclosed in this Background section is only for enhancement of understanding of the background of the invention and therefore it may contain information that does not form the prior art that is already known in this country to a person of ordinary skill in the art.

SUMMARY OF THE INVENTION

Exemplary embodiments of the present invention provide a liquid crystal display that operates in vertical alignment (VA) mode liquid crystal display with an improved contrast ratio.
Additional features of the invention will be set forth in the description which follows, and in part will be apparent from the description, or may be learned by practice of the invention.
An exemplary embodiment of the present invention discloses a liquid crystal display including: a first substrate; a color filter disposed on the first substrate; a second substrate facing the first substrate; a liquid crystal layer interposed between the first substrate and the second substrate; a first compensation film attached to the first substrate; a first polarizer disposed on an outer surface of the first compensation film; a second compensation film disposed on the second substrate; and a second polarizer disposed on an outer surface of the second compensation film, wherein the first compensation film has an in-plane phase retardation value Ro ranging from about -10nm to about 10nm and a thickness direction phase retardation value Rth ranging from about -10nm to about 10nm, and the second compensation film comprises a biaxial film.
An exemplary embodiment of the present invention discloses a liquid crystal display including: a first substrate; a color filter disposed on the first substrate; a second substrate; a liquid crystal layer interposed between the first substrate and the second substrate; a first compensation film disposed on the first substrate; a first polarizer disposed on an outer surface of the first compensation film; a second compensation film disposed on the second substrate; and a second polarizer attached to an outer surface of the second compensation film, wherein the first compensation film comprises a phase retardation layer having an in-plane phase retardation value (Ro) of 0 and a thickness direction phase retardation value (Rth) of 0, and the second compensation film comprises a biaxial film
An exemplary embodiment of the present invention discloses a liquid crystal display including: a first substrate; a color filter disposed on the first substrate; a second substrate facing the first substrate; a liquid crystal layer interposed between the first substrate and the second substrate; a first polarizer disposed on the first substrate; a compensation film disposed on the second substrate and not disposed between the first polarizer and the first substrate; and a second polarizer disposed on an outer surface of the compensation film, wherein, the compensation film comprises a biaxial film.

It is to be understood that both the foregoing general description and the following detailed description are exemplary and explanatory and are intended to provide further explanation of the invention as claimed.

A liquid crystal display according to an exemplary embodiment of the present invention includes a liquid crystal panel including: a first substrate, a second substrate facing the first substrate, and a liquid crystal layer interposed between the first substrate and the second substrate and driven in a vertical alignment (VA) mode; a first compensation film attached to the first substrate; a first polarizer attached to an outer surface of the first compensation film; a second compensation film attached to the second substrate; and a second polarizer attached to the outer surface of the second compensation film, wherein the first compensation film has an in-plane phase retardation value Ro of an about -10nm to about 10nm range and a thickness direction phase retardation value Rth of an about -10nm to about 10nm range, the second compensation film is formed with a biaxial film, and the liquid crystal panel includes a color filter disposed on the first substrate.

The thickness direction phase retardation value of the biaxial film may be in the range of about 250nm to about 310nm.

The in-plane phase retardation value of the biaxial film is may be in the range of about 45nm to about 75nm.

The first compensation film and the second compensation film may be formed with at least one of polymer resins of a tri-acetyl-cellulose (TAC) series, a cyclic olefin polymer (COP) series, and an acryl series.

The polymer resins of the acryl series may comprise polymethylmethacrylate (PMMA), and the thickness direction phase retardation value (Rth) of the first compensation film may be in an about -10nm to about 0nm range.

The liquid crystal display may further include: a thin film transistor disposed on the first substrate; a pixel electrode disposed on the thin film transistor; and a common electrode disposed on the second substrate, wherein the liquid crystal layer may be arranged by an electric field generated between the pixel electrode and the common electrode.

The first compensation film may be interposed between the first substrate and the first polarizer.

The second compensation film may be interposed between the second substrate and the second polarizer.

A liquid crystal display according to another exemplary embodiment of the present invention includes: a liquid crystal panel including a first substrate, a second substrate facing the first substrate, and a liquid crystal layer interposed between the first substrate and the second substrate and driven in a vertical alignment (VA) mode; a first compensation film attached to the first substrate; a first polarizer attached to an outer surface of the first compensation film; a second compensation film attached to second substrate; and a second polarizer attached to the outer surface of the second compensation film, wherein the first compensation film is formed with a phase retardation layer having an in-plane phase retardation value (Ro) of 0 and a thickness direction phase retardation value (Rth) of 0, the second compensation film is formed with a biaxial film, and the liquid crystal panel comprises a color filter disposed on the first substrate.

The thickness direction phase retardation value of the biaxial film may be in the range of about 250nm to about 310nm.

The in-plane phase retardation value of the biaxial film may be in the range of about 45nm to about 75nm.

The first compensation film and the second compensation film may be formed with at least one of polymer resins of a tri-acetyl-cellulose (TAC) series, a cyclic olefin polymer (COP) series, and an acryl series.

The liquid crystal display may further include; a thin film transistor disposed on the first substrate; a pixel electrode disposed on the thin film transistor; and a common electrode disposed on the second substrate, wherein the liquid crystal layer is arranged by an electric field generated between the pixel electrode and the common electrode.

The first compensation film may be interposed between the first substrate and the first polarizer.

The second compensation film may be interposed between the second substrate and the second polarizer.

A liquid crystal display according to another exemplary embodiment of the present invention includes: a liquid crystal panel including a first substrate, a second substrate facing the first substrate, and a liquid crystal layer interposed between the first substrate and the second substrate and driven in a vertical alignment (VA) mode; a first polarizer attached to the first substrate; a compensation film attached to the second substrate; and a second polarizer attached to an outer surface of the compensation film, wherein the compensation film is a biaxial film, the liquid crystal panel comprises a color filter disposed on the first substrate, and the compensation film is not disposed between the first substrate and the first polarizer.

A thickness direction phase retardation value of the biaxial film may be in the range of about 250nm to about 310nm.

An in-plane phase retardation value of the biaxial film may be in the range of about 45nm to about 75nm.

The compensation film may be formed with at least one of polymer resins of a tri-acetyl-cellulose (TAC) series, a cyclic olefin polymer (COP) series, and an acryl series.

The liquid crystal display may further include: a thin film transistor disposed on the first substrate; a pixel electrode disposed on the thin film transistor; and a common electrode disposed on the second substrate, wherein the liquid crystal layer is arranged by an electric field generated between the pixel electrode and the common electrode.

The compensation film may be interposed between the second substrate and the second polarizer. According to an exemplary embodiment of the present invention, in the structure of the liquid crystal display in which the color filter is disposed in the lower panel, the luminance of a black image may be minimized through optimized optical design such that the contrast ratio may be improved.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a cross-sectional view of a liquid crystal display according to an exemplary embodiment of the present invention.

FIG. 2A, FIG. 3A, and FIG. 4A are cross-sectional views of a liquid crystal display in which an upper panel includes a color filter according to an exemplary embodiment, and FIG. 2B, FIG. 3B, and FIG. 4B are views showing a Poincare sphere that display various polarization states according to an exemplary embodiment of the present invention.

FIG. 5A, FIG. 6A, and FIG. 7A are cross-sectional views of a liquid crystal display in which a lower panel includes a color filter according to an exemplary embodiment of the present invention, and FIG. 5B, FIG. 6B, and FIG. 7B are views showing a Poincare sphere that display various polarization states according to an exemplary embodiment of the present invention.

FIG. 8A is a cross-sectional view of a liquid crystal display in which a lower panel includes a color filter according to an exemplary embodiment, and FIG. 8B is a cross-sectional view of a Poincare sphere that displays various polarization states according to a path of a light in the liquid crystal display of FIG. 8A.

FIG. 9A is a graph showing black luminance of a front side in the liquid crystal display according to an exemplary embodiment of the present invention.

FIG. 9B is a graph showing a black luminance of a front side in the liquid crystal display with an inverted placement of a compensation structure, with reference to the liquid crystal display of FIG. 9A.

FIG. 10 is a graph showing a contrast ratio of a front side of the liquid crystal display according to an exemplary embodiment of the present invention.

FIG. 11 is a cross-sectional view of a liquid crystal display according to an exemplary embodiment of the present invention.

Throughout the drawings and the detailed description, unless otherwise described, the same drawing reference numerals should be understood to refer to the same elements, features, and structures. The relative size and depiction of these elements may be exaggerated for clarity, illustration, and convenience.

DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element or layer is referred to as being "on" or "connected to" another element or layer, it can be directly on or directly connected to the other element or layer, or intervening elements or layers may be present. In contrast, when an element or layer is referred to as being "directly on" or "directly connected to" another element or layer, there are no intervening elements or layers present.

It will be understood that for the purposes of this disclosure, "at least one of X, Y, and Z" can be construed as X only, Y only, Z only, or any combination of two or more items X, Y, and Z (e.g., XYZ, XYY, YZ, ZZ).

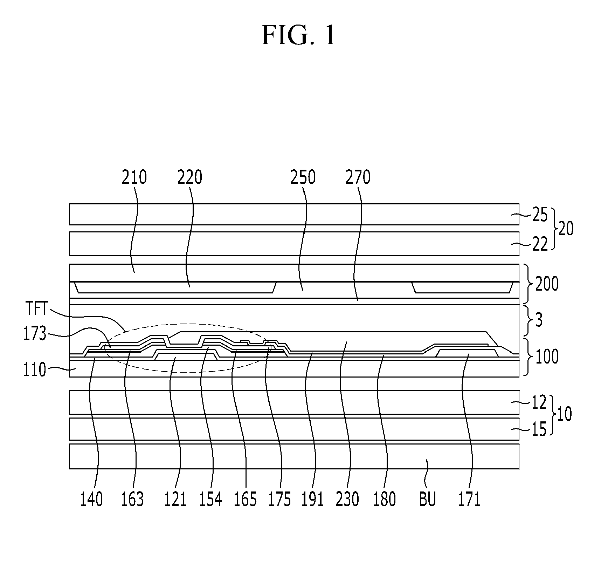

FIG. 1 is a cross-sectional view of a liquid crystal display according to an exemplary embodiment.

Referring to FIG. 1, a liquid crystal display includes a lower panel 100, an upper panel 200, a first optical unit 10 under the lower panel 100, and a second optical unit 20 disposed on the upper panel 200. The first optical unit 10 includes a first compensation film 12 and a first polarizer 15, and the second optical unit 20 includes a second compensation film 22 and a second polarizer 25.

The lower panel 100 includes a first substrate 110, a gate line 121 that includes a gate electrode and disposed on the first substrate 110, a gate insulating layer 140 disposed on the gate line 121, a semiconductor layer 154 disposed on the gate insulating layer 140, ohmic contacts 163 and 165 disposed on the semiconductor layer 154, a data line 171 disposed on the ohmic contacts 163 and 165, a source electrode 173, a drain electrode 175, a passivation layer 180 to cover the source electrode 173 and the drain electrode 175, a pixel electrode 191 disposed on the passivation layer 180, and a color filter 230 disposed on the pixel electrode 191. Although not shown in FIG. 1, the color filter 230 may be disposed under the pixel electrode 191. Thus, the color filter 230 may be disposed on the lower panel 100.

The upper panel 200 includes a light blocking member 220 disposed on a second substrate 210, an overcoat 250 disposed on the light blocking member 220, and a common electrode 270 disposed on the overcoat 250. The light blocking member 220 may be formed in the lower panel 200. The common electrode 270 is made of a transparent conductive material and is applied a common voltage.

The liquid crystal display further includes a liquid crystal layer 3 interposed between the lower panel 100 and the upper panel 200.

The gate electrode 121, the source electrode 173, and the drain electrode 175 are used to form a TFT, and the TFT is electrically connected to the pixel electrode 191. The pixel electrode 191 is made of a transparent conductive material and receives data voltages transmitted from the data line 171 through the TFT.

The liquid crystal layer 3 may be driven in a vertical alignment mode. That is, in a state in which an electric field is not formed between the pixel electrode 191 and the common electrode 270, liquid crystals of the liquid crystal layer 3 are arranged in a direction perpendicular to the surface of the first substrate 110. If an electric field is formed between the pixel electrode 191 and the common electrode 270, the liquid crystals of the liquid crystal layer 3 become inclined with respect to the surface of the first substrate 110, and as the intensity of the electric field is increased, the inclined angle is also increased, resulting in the liquid crystals being inclined in a direction parallel to the surface of the first substrate 110.

The first optical unit 10 includes the first polarizer 15, which is disposed under the lower panel 100 and the first compensation film 12, which is disposed between the first polarizer 15 and the lower panel 100. The first compensation film 12 may be made of a phase retardation layer having an in-plane phase retardation value Ro of about 0 and a thickness direction phase retardation value Rth of about 0. The light generated from a light source BU disposed under the first polarizer 15 is passed through the first polarizer 15 and the first compensation film 12, and is incident to the lower panel 100. The second optical unit 20 includes the second polarizer 25 disposed on the upper panel 200 and the second compensation film 22 disposed between the second polarizer 25 and the upper panel 200. The second compensation film 22 may be formed with a biaxial film.

The compensation film has refractive indexes nx, ny, and nz of x, y, and z axis directions, and a negative C-plate is satisfied with a refractive index relationship of nx=ny>nz, and a biaxial film is satisfied with a refractive index relation of nx#ny#nz. Also, the in-plane phase retardation value Ro and the thickness direction phase retardation value Rth are values defined by Equation 1 and Equation 2 below, where d is a thickness of the compensation film.

Equation 1:

$$Ro = (n_x - n_y) * d$$

Equation 2:

$$Rth = ((n_x + n_y)/2 - n_z) * d$$

The first compensation film 12 and the second compensation film 22 may be at least one of a: polymer resin of a tri-acetyl-cellulose (TAC) series film, a cyclic olefin polymer (COP) series film, and an acryl series film. The acryl series polymer resin may include polymethylmethacrylate (PMMA).

The light sequentially passing through the lower panel 100, the liquid crystal layer 3, and the upper panel 200 is passed through the second optical unit 20, thereby causing images to be displayed.

For the liquid crystal display described with reference to FIG. 1, in the structure in which the color filter 230 is disposed in the lower panel 100, light leakage according to the scattering of the light generated in the TFT and the color filter 230 may be minimized through an optical design in which the first compensation film 12 is disposed between the lower panel 100 and the first polarizer 15 is formed with the phase retardation layer having an in-plane phase retardation value Ro of 0 and the thickness direction phase retardation value Rth close to 0, and the second compensation film 22 is disposed between the upper panel 200 and the second polarizer 25 is formed with biaxial film.

An optical design of the structure in which the color filter is formed in the lower panel 100 to minimize light leakage will be described.

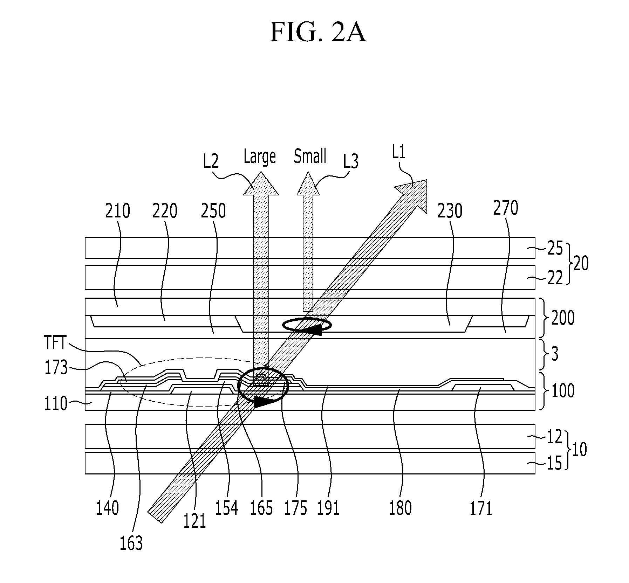

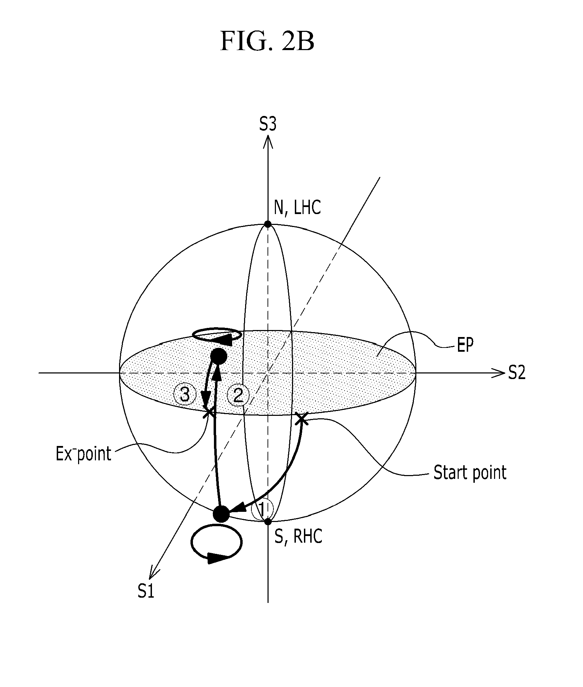

FIG. 2A, FIG. 3A, and FIG. 4A are cross-sectional views of a liquid crystal display in which an upper panel includes a color filter according to an exemplary embodiment, and FIG. 2B, FIG. 3B, and FIG. 4B are views showing a Poincare sphere that display various polarization states according to an exemplary embodiment.

The Poincare sphere is a display that allows for the the liquid crystal display at the front side with reference to an observer at an azimuth angle of 45 degrees and a polar angle of 60 degrees to be depicted. Moreover, the Poincare sphere may represent a polarization state according to a Stokes parameter in a coordinate of a 3D space. Further, the north hemisphere of the Poincare sphere has a left-handed circle (LHC), and the south hemisphere of the Poincare sphere has a right-handed circle (RHC).

Also, shapes of a circle or an oval shown in the Poincare sphere may represent the polarization state according to a distortion degree thereof. That is, a shape closer to a circle is may represent a state closer to a circular polarization state, and a shape that is closer to a linear polarization state may represent an increase degree of distortion in the oval.

Referring to FIG. 2A, a liquid crystal display includes the color filter 230, which is formed in the upper panel 200, the first compensation film 12 made of the biaxial film, and the second compensation film 22 made of the negative C-plate.

Referring to FIG. 2A and FIG. 2B, while the light L1 generated from a light source (not shown) disposed under the first optical unit 10 passes through the first optical unit 10, the polarization state on the Poincare sphere is moved along Curve ①, thereby being closer to the circular polarization state. The light passing through the first optical unit 10 is incident to the lower panel 100 and due to the interaction with the TFT, scattering L2 is generated. The scattering is generated in the state closer to the circular polarization, thereby causing the light leakage amount to be large. While the light passing through the lower panel 100 passes through the liquid crystal layer 3, the polarization state on the Poincare sphere moves along Curve ②, thus entering a stage closer to an equatorial plane EP. The light passing through the liquid crystal layer 3 is incident to the upper panel 200 and interacts with the color filter 230 disposed on the upper panel 200. The scattering L3 is generated by the color filter 230, so that less light leakage than the light leakage by the TFT described above, is generated. While the light passing through the upper panel 200 passes through the second optical unit 20, the polarization state on the Poincare sphere moves along Curve ③ such that it reaches a extinction point Ex-point, which is at the equatorial plane EP of the Poincare sphere.

The extinction point Ex-point of the Poincare sphere is the position representing an ideal polarization state of the light that is transmitted from the first polarizer 15 to the second compensation film 22.

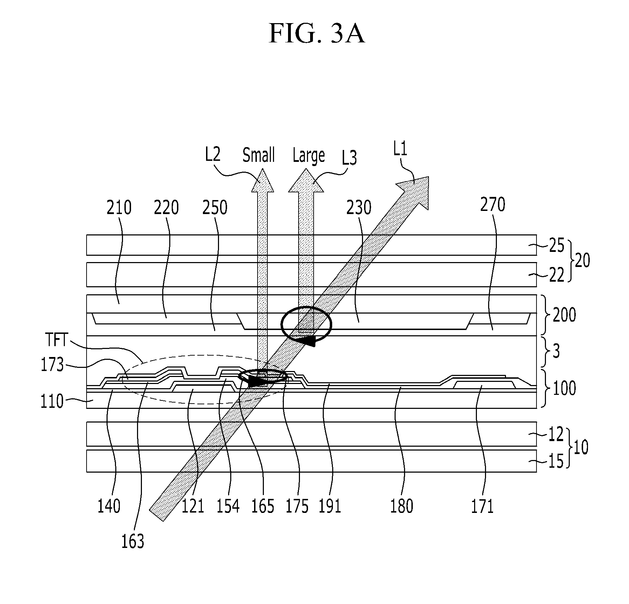

Referring to FIG. 3A, the liquid crystal display includes the color filter 230 disposed in the upper panel 200, the first compensation film 12 made of the negative C-plate, and the second compensation film 22 made of the biaxial film.

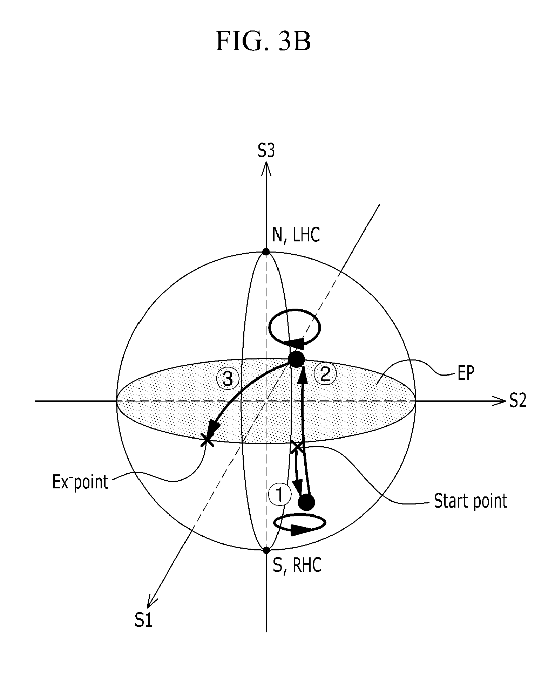

Referring to FIG. 3A and FIG. 3B, while the light L1 generated from a light source (not shown) disposed under the first optical unit 10 passes through the first optical unit 10, the polarization state on the Poincare sphere moves along Curve ①, therefore being disposed between the geographic south pole S and the equatorial plane EP. The light passing through the first optical unit 10 is incident to the lower panel 100 and interacts with the TFT, thereby generating a scattering of L2. Here, the scattering L2 by the TFT generates a lesser light leakage compared with the scattering generated in the circular polarization state. While the light passing through the lower panel 100 is passed through the liquid crystal layer 3, the polarization state on the Poincare sphere moves along Curve ②, therefore being disposed between the equatorial plane EP and the geographic north pole N. The light passing through the liquid crystal layer 3 is incident to the upper panel 200 and interacts with the color filter 230 disposed in the upper panel 200. The scattering L3 generated by the color filter 230 has more light leakage than the above-described light leakage of the TFT. While the light passing through the upper panel 200 is passed through the second optical unit 20, the polarization state on the Poincare sphere moves along Curve ③, thereby reaching the extinction point Ex-point disposed at the equatorial plane EP of the Poincare sphere.

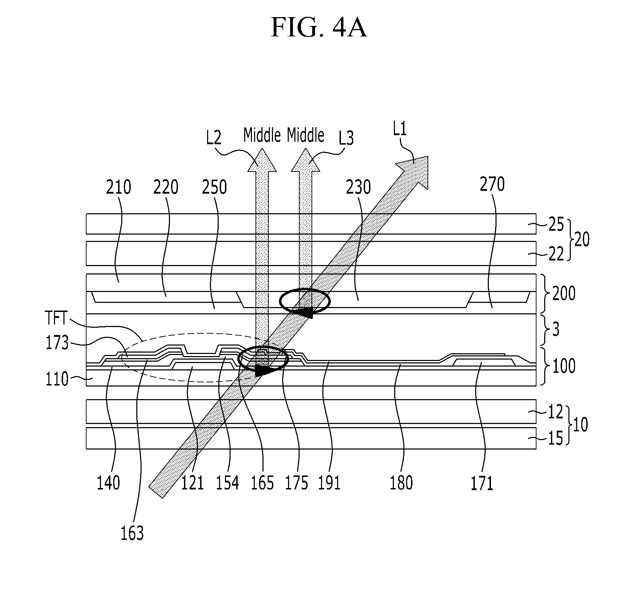

Referring to FIG. 4A, the liquid crystal display includes the color filter 230 disposed in the upper panel 200, the first compensation film 12 and the second compensation film 22, with both the compensation films being made of biaxial film.

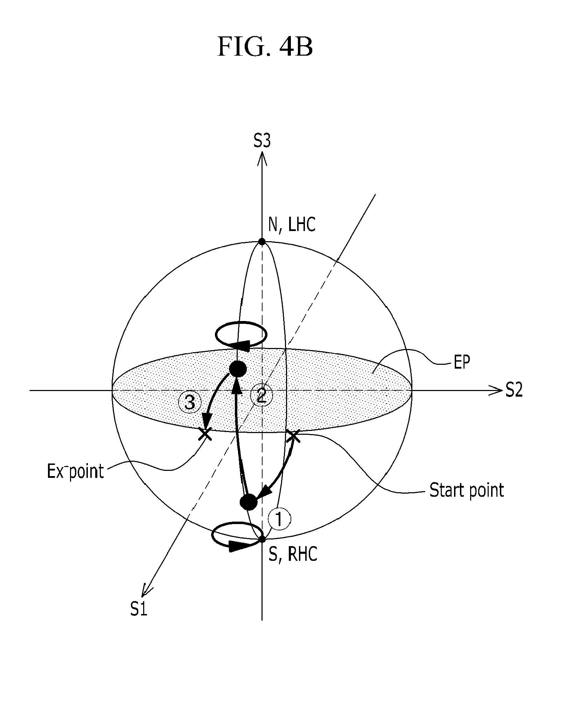

Referring to FIG. 4A and FIG. 4B, while the light L1 generated from a light source (not shown) disposed under the first optical unit 10 passes through the first optical unit 10, the polarization state on the Poincare sphere moves along Curve ①, thereby being disposed between the geographic south pole S and the equatorial plane EP. The light passing through the first optical unit 10 is incident to the lower panel 100 and interacts with the TFT, thereby generating scattering L2. The scattering L2 by the TFT generates lesser light leakage than the scattering generated in the circular polarization state. While the light passing through the lower panel 100 passes through the liquid crystal layer 3, the polarization state on the Poincare sphere moves along Curve ②, thereby being disposed between the equatorial plane EP and the geographic north pole N. The light passing through the liquid crystal layer 3 is incident to the upper panel 200 and interacts with the color filter 230 disposed in the upper panel 200. The scattering L3 is generated by the color filter 230 such that the light leakage is generated to a similar degree as the above-described light leakage by TFT. While the light passing through the upper panel 200 passes through the second optical unit 20, the polarization state on the Poincare sphere moves along Curve ③ and reaches the extinction point Ex-point disposed at the equatorial plane EP of the Poincare sphere.

Thus far, the phenomenon of a light leakage degree being based on the scattering of the light by the TFT and the color filter 230, and changed due to an addition of a compensation film, if a color filter 230 is disposed in the upper panel 200, has been disclosed. The various differences of light leakage generated in the case of three compensation structures is described above, and thus, due to this difference, more light leakage than a certain level is generated. Accordingly, it may be difficult to design the optical compensation structure with the combination of biaxial film and the negative C-plate with a liquid crystal display, in which the color filter 230 is disposed in the upper panel 200.

The line polarization is decreased when it is far from the equatorial plane EP of the Poincare sphere, so that the light leakage may be reduced if the scattering is generated in a state where the line polarization is near the maximum equatorial plane EP.

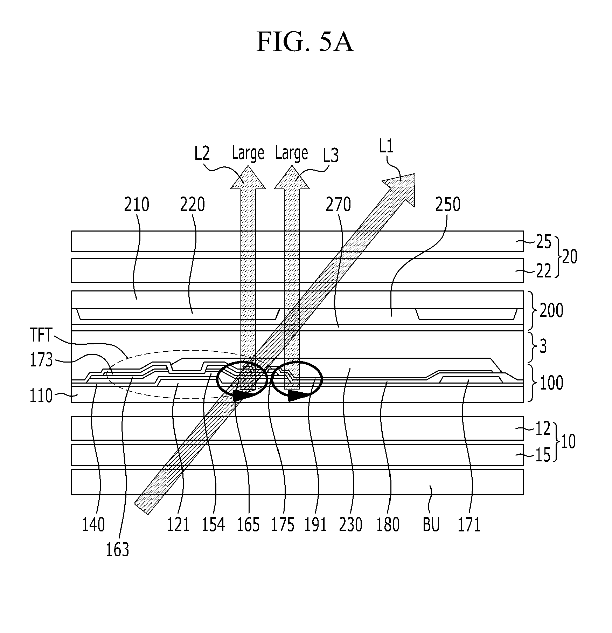

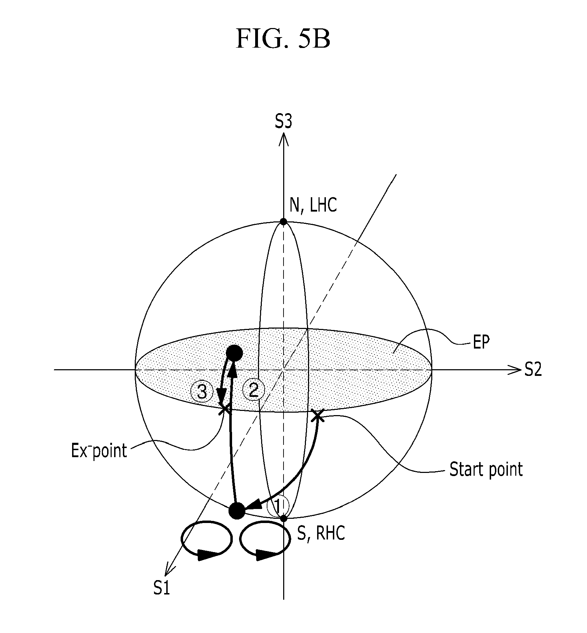

FIG. 5A, FIG. 6A, and FIG. 7A are cross-sectional views of a liquid crystal display in which a lower panel includes a color filter according to an exemplary embodiment of the present invention, and FIG. 5B, FIG. 6B, and FIG. 7B are views showing a Poincare sphere that display various polarization states according to an exemplary embodiment of the present invention.

Referring to FIG. 5A, the liquid crystal display includes the color filter 230 disposed in the lower panel 100, the first compensation film 12 made of the biaxial film, and the second compensation film 22 formed with the negative C-plate.

Referring to FIG. 5A and FIG. 5B, while the light L1 generated from the light source (not shown) disposed under the first optical unit 10 passes through the first optical unit 10, the polarization state on the Poincare sphere moves along Curve ①, so that it is closer to the circular polarization state. The light passing through the first optical unit 10 is incident to the lower panel 100 and interacts with the TFT and the color filter 230, thereby generating scattering L2 and L3. Here, the scattering L2 by the TFT and the scattering L3 by the color filter 230 are generated in a state closer to the circular polarization, thereby generating a large light leakage. While the light passing through the lower panel 100 is passed through the liquid crystal layer 3, the polarization state on the Poincare sphere moves along Curve ②, such that the polarization state becomes closer to the equatorial plane EP. The light passing through the liquid crystal layer 3 is incident to the upper panel 200, and while the light passing through the upper panel 200 passes through the second optical unit 20, the polarization state on the Poincare sphere moves along Curve ③, such that the polarization state reaches the extinction point Ex-point disposed at the equatorial plane EP of the Poincare sphere.

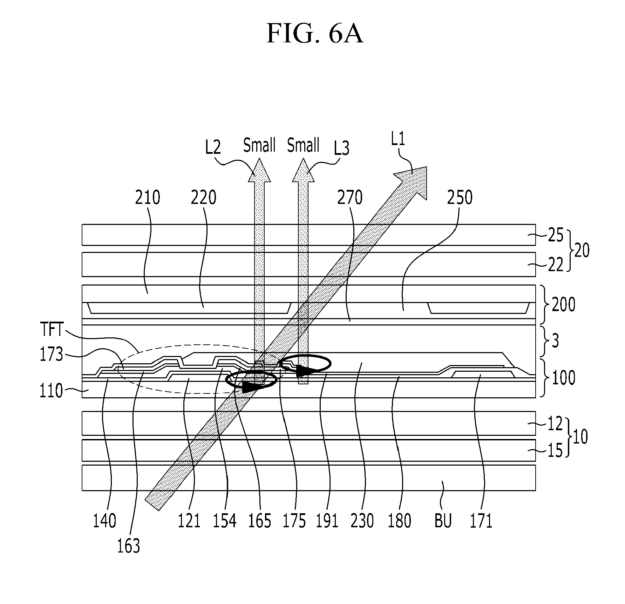

FIG. 6A shows the liquid crystal display including the color filter 230 disposed in the lower panel 100, the first compensation film 12 formed with the negative C-plate, and the second compensation film 22 formed with the biaxial film.

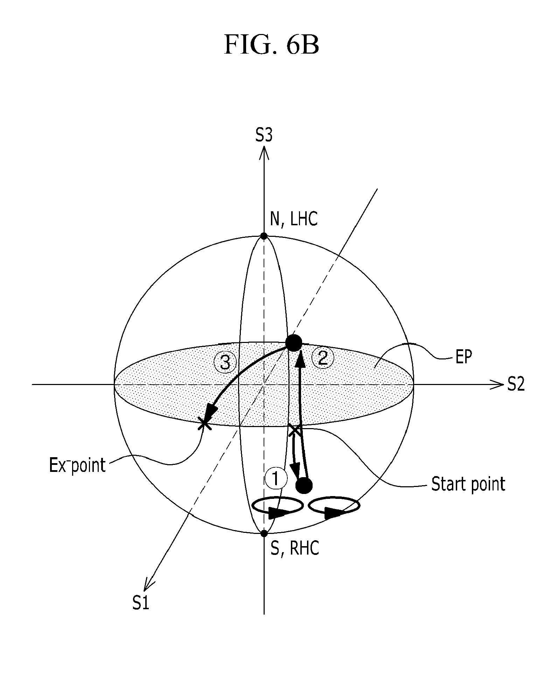

Referring to FIG. 6A and FIG. 6B, while the light L1 generated in a light source (not shown) disposed under the first optical unit 10 passes through the first optical unit 10, the polarization state of the Poincare sphere moves along Curve ① and is thereby disposed between the geographic south pole S and the equatorial plane EP. The light passing through the first optical unit 10 is incident to the lower panel 100 and interacts with the TFT and the color filter 230, thereby generating scattering L2 and L3. Here, the scattering L2 by the TFT and the scattering L3 by the color filter 230 generates lesser light leakage than the scattering generated in the circular polarization state. While the light passing through the lower panel 100 passes through the liquid crystal layer 3, the polarization state on the Poincare sphere moves along Curve ② such that the polarization state is disposed between the equatorial plane EP and the geographic north pole N. While the light passing through the liquid crystal layer 3 is incident to the upper panel 200 and the light passing through the upper panel 200 passes through the second optical unit 20, the polarization state on the Poincare sphere moves along Curve ③ such that the polarization state reaches the extinction point Ex-point disposed at the equatorial plane EP of the Poincare sphere.

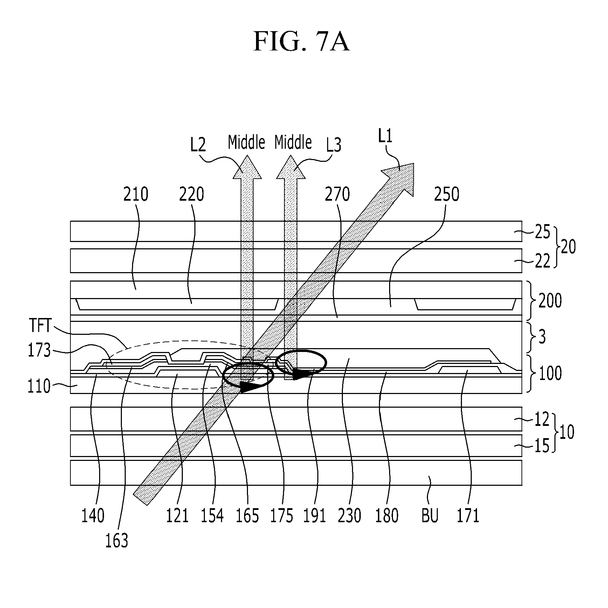

FIG. 7A shows the liquid crystal display including the color filter 230 disposed in the lower panel 100, and the first compensation film 12 and the second compensation film 22 both formed with the biaxial film.

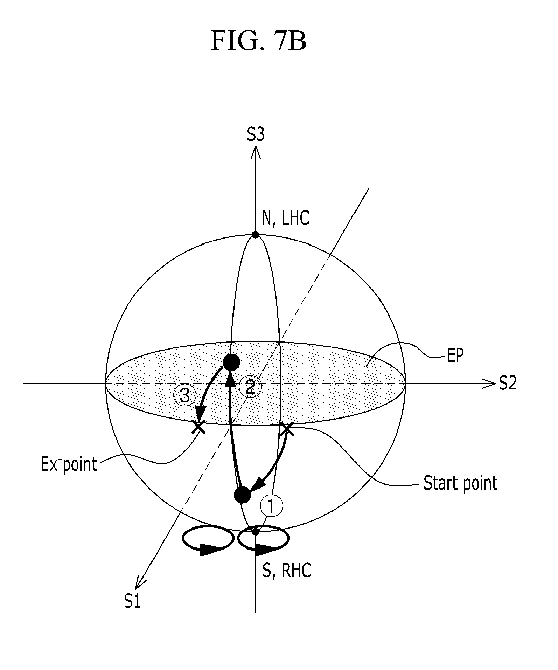

Referring to FIG. 7A and FIG. 7B, while the light L1 generated from the light source (not shown) disposed under the first optical unit 10 passes through the first optical unit 10, the polarization state on the Poincare sphere moves along Curve ① such that the polarization state is disposed between the geographic south pole S and the equatorial plane EP. Here, the polarization state between the geographic south pole S and the equatorial plane EP is disposed closer to the geographic south pole S than the polarization state while generating the scattering by the TFT and the color filter 230 described with reference to FIG. 6A and FIG. 6B. The light passing through the first optical unit 10 is incident to the lower panel 100 and interacts with the thin film transistor (TFT) and the color filter 230, thereby generating scattering L2 and L3. Here, the scattering L2 by the TFT and the scattering L3 by the color filter 230 generates lesser light leakage than the scattering generated in the circular polarization state. While the light passing through the lower panel 100 passes through the liquid crystal layer 3, the polarization state on the Poincare sphere moves along Curve ② such that it is disposed between the equatorial plane EP and the geographic north pole N. While the light passing through the liquid crystal layer 3 is incident to the upper panel 200 and the light passing through the upper panel 200 is passed through the second optical unit 20, the polarization state on the Poincare sphere moves along Curve ③ such that it reaches the extinction point Ex-point disposed at the equatorial plane EP of the Poincare sphere.

As described with reference to FIG. 5A to FIG. 7B, , if the first compensation film 12 is formed with the negative C-plate and the second compensation film 22 is formed with the biaxial film, the light leakage degree is lower, thereby allowing the contrast ratio may be increased.

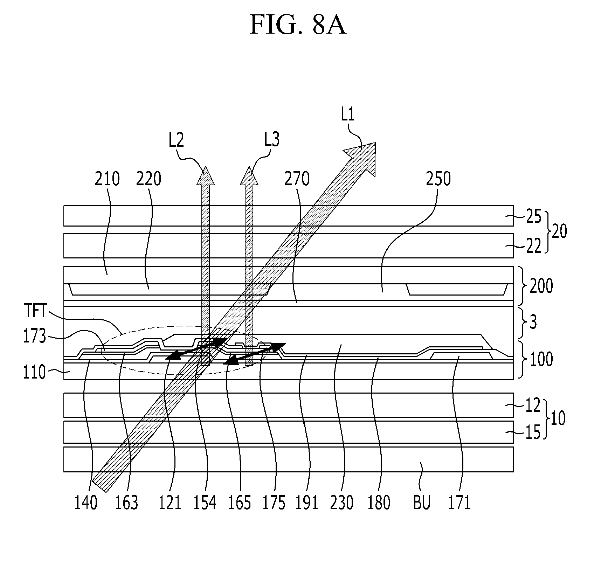

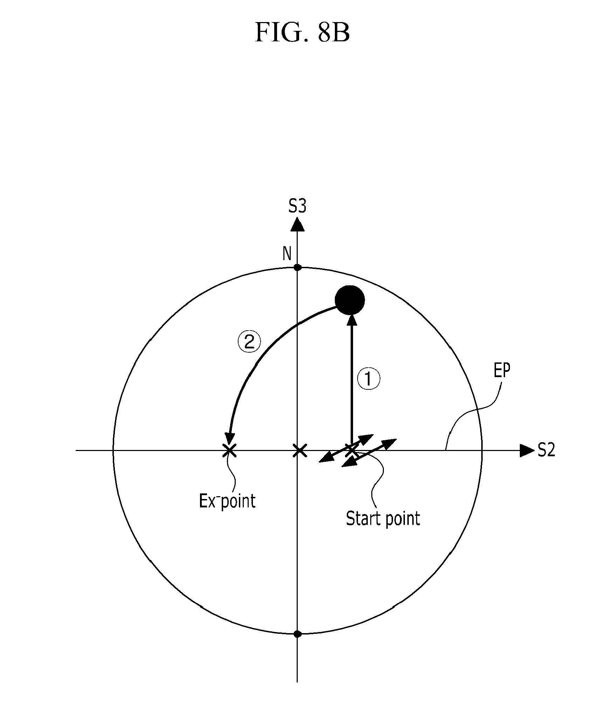

FIG. 8A is a cross-sectional view of a liquid crystal display in which a lower panel includes a color filter according to an exemplary embodiment, and FIG. 8B is a cross-sectional view of a Poincare sphere that displays various polarization states according to a path of a light in the liquid crystal display of FIG. 8A.

Referring to FIG. 8A, the liquid crystal display includes the color filter 230 disposed in the lower panel 100, the first compensation film 12 formed with the phase retardation layer having the in-plane phase retardation value Ro and the thickness direction phase retardation value Rth near 0, and the second compensation film 22 formed with the biaxial film having a high thickness direction phase retardation value.

Referring to FIG. 8A and FIG. 8B, the light L1 generated from a light source (not shown) disposed under the first optical unit 10 passes through the first optical unit 10. Here, the phase difference of the first compensation film 12 is close to 0 such that the polarization state on the Poincare sphere is close to the linear polarization state. The light passing through the first optical unit 10 is incident to the lower panel 100 and interacts with the TFT and the color filter 230, thereby generating scattering L2 and L3. Here, the scattering L2 by the TFT and the scattering L3 by the color filter 230 are generated in the linear polarization state such that the light leakage is minimized or lessened. While the light passing through the lower panel 100 passes through the liquid crystal layer 3, the polarization state of the Poincare sphere moves along Curve ①, thereby being disposed closer to the geographic north pole N. While the light passing through the liquid crystal layer 3 is incident to the upper panel 200 and the light passing through the upper panel 200 is passed through the second optical unit 20, the polarization state on the Poincare sphere moves along Curve ② such that it reaches the extinction point Ex-point disposed at the equatorial plane EP of the Poincare sphere.

The phase difference of the first compensation film 12 may have an in-plane phase retardation value of the range of - 10nm to 10nm and a thickness direction phase retardation value of the range of -10nm to 10nm. The thickness direction phase retardation value of the biaxial film corresponding to the second compensation film 22 may be about 250nm to about 310nm, and the in-plane phase retardation value may be about 45nm to about 75nm. If the first compensation film 12 is formed with polymethylmethacrylate (PMMA), the thickness direction phase retardation value Rth of the first compensation film 12 may be in the range of about -10nm to about 0nm.

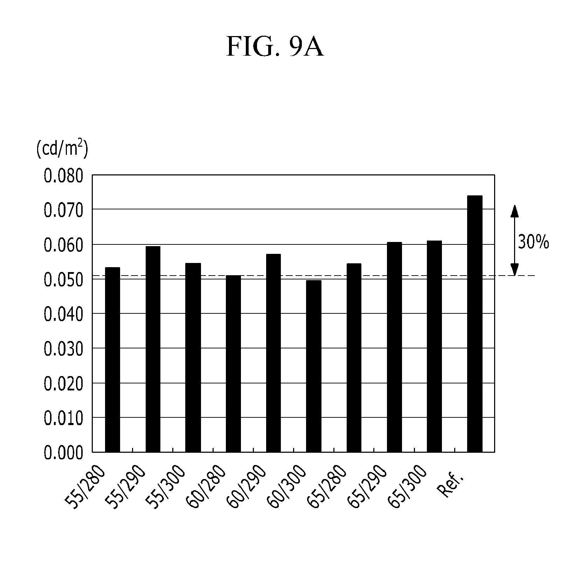

FIG. 9A is a graph showing black luminance of a front side in the liquid crystal display according to an exemplary embodiment. The liquid crystal display has a compensation structure disposed in the first substrate, as shown in FIG. 8.

In FIG. 9A, the horizontal axis represents the in-plan phase retardation value for the thickness direction phase retardation value, and the vertical axis represents the luminance of the black image in the front side. Also, the comparative example Ref. indicates a case in which the color filter is disposed in the lower panel, and the first compensation film and the second compensation film are both formed with the biaxial film.

Referring to FIG. 9A, the luminance of the black image in the liquid crystal display is decreased by about 30% compared with the comparative example, Ref.

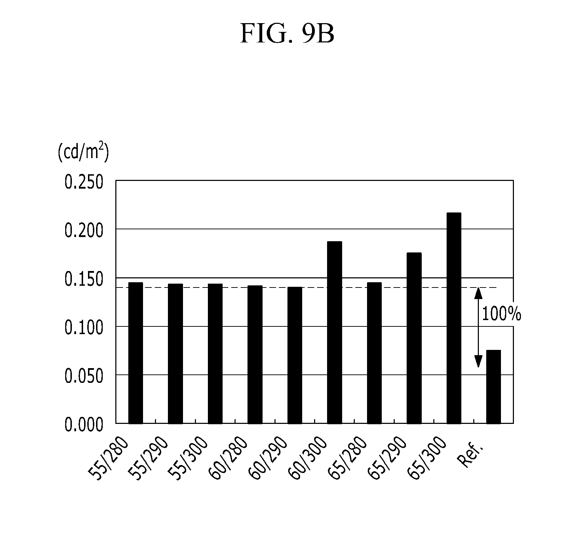

FIG. 9B is a graph showing a black luminance of a front side in the liquid crystal display with an inverted placement of a compensation structure with reference to the liquid crystal display of FIG. 9A.

In detail, FIG. 9B represents the black luminance in the front side in the case of the liquid crystal display including the color filter disposed in the lower panel, the first compensation film 12 formed with the biaxial film having the high thickness direction phase retardation value, and the second compensation film 22 formed with the phase retardation layer having the phase difference close to 0. Also, like FIG. 9A, the comparative example Ref. represents a case in which the color filter is disposed in the lower panel, and the first compensation film and the second compensation film are both formed with biaxial film.

In FIG. 9A, a structure of the liquid crystal display in which the color filter is disposed in the lower panel, and if the first compensation film disposed under the lower display panel is formed with the phase retardation layer having a phase difference close to 0, and the second compensation film disposed on the upper panel is formed with biaxial film having a high thickness direction phase retardation value, the black luminance is relatively low. However, in FIG. 9B, in which results are shown while forming a reversed compensation structure, such that the liquid crystal display in which the first compensation film 12 is formed with biaxial film having the high thickness direction phase retardation value, the second compensation film 22 is formed with the phase retardation layer having the phase difference close to 0, the black luminance is increased by 100% compared with the comparative example, Ref., thereby indicating that light leakage is maximized or increased.

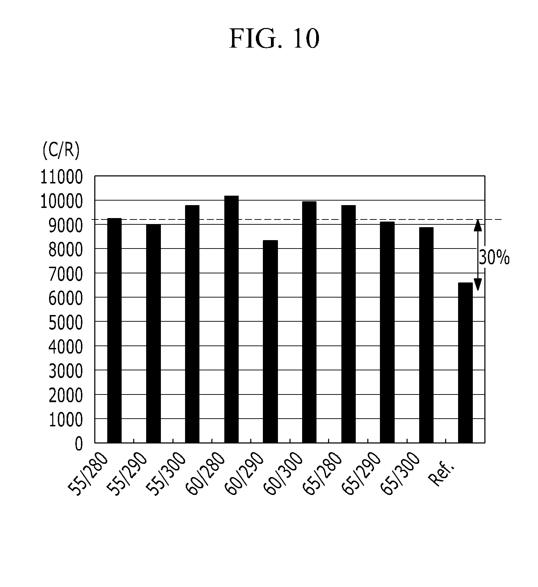

FIG. 10 is a graph showing a contrast ratio of a front side of the liquid crystal display according to an exemplary embodiment. The liquid crystal display corresponds to the structure shown in FIG. 8A.

Referring to FIG. 10, it may be evidenced that an opposite trend of the graph shown in FIG. 9A may occur. Thus, contrast ratio may be larger than a Ref. value. This is due to the contrast ratio being increased as the black luminance is decreased. Thus, the contrast ratio is improved more than 30% compared with the comparative example, Ref., if the first compensation film and the second compensation film are both formed with the biaxial film.

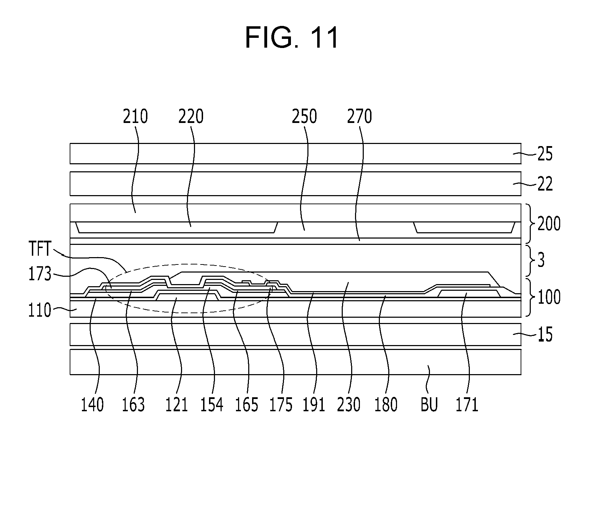

FIG. 11 is a cross-sectional view of a liquid crystal display according to an exemplary embodiment.

Referring to FIG. 11, the liquid crystal display is similar to the liquid crystal display shown in FIG. 8A and FIG. 8B, however the first compensation film is omitted. Thus, the compensation film does not exist between the lower panel 100 and the first polarizer 15.

As the first compensation film described in this disclosure may have a phase retardation layer having a phase difference close to 0, the first compensation film therefor does not contribute to the phase difference. Accordingly, the compensation film is removed between the lower panel 100 and the first polarizer 15, as shown in FIG. 11, and has the same optical characteristic of the phase retardation layer having the phase difference close to 0. Thus, the advantages associated with the display in reference to FIG. 8 may be the same as the advantages of this device.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

**Claims**

1. A liquid crystal display comprising:

   a first substrate;
   a color filter disposed on the first substrate;
   a second substrate facing the first substrate;
   a liquid crystal layer interposed between the first substrate and the second substrate;
   a first compensation film attached to the first substrate;
   a first polarizer disposed on an outer surface of the first compensation film;
   a second compensation film disposed on the second substrate; and
   a second polarizer disposed on an outer surface of the second compensation film,
   wherein the first compensation film has an in-plane phase retardation value Ro ranging from about -10nm to about 10nm and a thickness direction phase retardation value Rth ranging from about -10nm to about 10nm, and
   the second compensation film comprises a biaxial film.

2. The liquid crystal display of claim 1, wherein the thickness direction phase retardation value of the biaxial film ranges from about 250nm to about 310nm.

3. The liquid crystal display of claim 2, wherein the in-plane phase retardation value of the biaxial film is in the ranges from about45nm to about 75nm.

4. The liquid crystal display of claim 3, wherein the first compensation film and the second compensation film comprise a tri-acetyl-cellulose (TAC) series polymer resin, a cyclic olefin polymer (COP) series polymer resin, or an acryl series polymer resin, or any combination thereof.

5. The liquid crystal display of claim 4, wherein:

   the polymer resin of the acryl series comprises polymethylmethacrylate (PMMA); and
   the thickness direction phase retardation value Rth of the first compensation film ranges from about -10nm to about 0nm.

6. The liquid crystal display of claim 1, further comprising:

   a thin film transistor disposed on the first substrate;
   a pixel electrode disposed on the thin film transistor; and
   a common electrode disposed on the second substrate,
   wherein liquid crystal molecules of the liquid crystal layer are arranged according to an electric field generated between the pixel electrode and the common electrode.

7. The liquid crystal display of claim 1, wherein the first compensation film is interposed between the first substrate and the first polarizer.

8. The liquid crystal display of claim 7, wherein the second compensation film is interposed between the second substrate and the second polarizer.

9. A liquid crystal display comprising:

   a first substrate;
   a color filter disposed on the first substrate;
   a second substrate;
   a liquid crystal layer interposed between the first substrate and the second substrate;
   a first compensation film disposed on the first substrate;
   a first polarizer disposed on an outer surface of the first compensation film;
   a second compensation film disposed on the second substrate; and
   a second polarizer attached to an outer surface of the second compensation film,
   wherein the first compensation film comprises a phase retardation layer having an in-plane phase retardation value (Ro) of 0 and a thickness direction phase retardation value (Rth) of 0, and the second compensation film comprises a biaxial film.

10. The liquid crystal display of claim 9, wherein the thickness direction phase retardation value of the biaxial film ranges from about 250nm to about 3 10nm.

11. The liquid crystal display of claim 10, wherein the in-plane phase retardation value of the biaxial film is in the ranges from about 45nm to about 75nm.

**12.** The liquid crystal display of claim 11, wherein the first compensation film and the second compensation film comprises a tri-acetyl-cellulose (TAC) series polymer resin, a cyclic olefin polymer (COP) series polymer resin, or an acryl series polymer resin, or any combination thereof.

**13.** The liquid crystal display of claim 9, further comprising:

a thin film transistor disposed on the first substrate;
a pixel electrode disposed on the thin film transistor; and
a common electrode disposed on the second substrate,
wherein liquid crystal molecules of the liquid crystal layer are arranged according to an electric field generated between the pixel electrode and the common electrode.

**14.** The liquid crystal display of claim 9, wherein the first compensation film is interposed between the first substrate and the first polarizer.

**15.** The liquid crystal display of claim 14, wherein the second compensation film is interposed between the second substrate and the second polarizer.

# FIG. 1

FIG. 2A

# FIG. 2B

# FIG. 3A

FIG. 3B

# FIG. 4A

## FIG. 4B

FIG. 5A

## FIG. 5B

# FIG. 6A

# FIG. 6B

EP 2 520 971 A1

# FIG. 7A

## FIG. 7B

# FIG. 8A

# FIG. 8B

FIG. 9A

FIG. 9B

FIG. 10

# FIG. 11

Europäisches
Patentamt

European
Patent Office

Office européen
des brevets

# EUROPEAN SEARCH REPORT

**Application Number**

EP 11 18 6653

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/164580 A1 (UEDA NARIFUMI [JP] ET AL) 27 July 2006 (2006-07-27) * paragraphs [0103], [0108], [0109], [0115], [0117]; figures 1,2,4A,4B,6A * | 1-15 | INV. G02F1/13363 |
| A | US 2009/033839 A1 (FUKUDA KENICHI [JP]) 5 February 2009 (2009-02-05) * paragraph [0223] * | 1-15 | |
| A | US 2009/128759 A1 (YOSHIMI HIROYUKI [JP] ET AL) 21 May 2009 (2009-05-21) * paragraphs [0039], [0040] * | 1-15 | |

| | |
|---|---|
| | **TECHNICAL FIELDS SEARCHED (IPC)** |
| | G02F |

The present search report has been drawn up for all claims

| Place of search | Date of completion of the search | Examiner |
|---|---|---|
| Munich | 15 December 2011 | Smid, Albert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 18 6653

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2011

| Patent document cited in search report | | Publication date | Patent family member(s) | | Publication date |
|---|---|---|---|---|---|
| US 2006164580 | A1 | 27-07-2006 | JP | 3883134 B2 | 21-02-2007 |
| | | | JP | 2006234848 A | 07-09-2006 |
| | | | TW | I264586 B | 21-10-2006 |
| | | | US | 2006164580 A1 | 27-07-2006 |
| US 2009033839 | A1 | 05-02-2009 | KR | 20090013091 A | 04-02-2009 |
| | | | TW | 200912484 A | 16-03-2009 |
| | | | US | 2009033839 A1 | 05-02-2009 |
| US 2009128759 | A1 | 21-05-2009 | CN | 101441378 A | 27-05-2009 |
| | | | JP | 4726148 B2 | 20-07-2011 |
| | | | JP | 2009128411 A | 11-06-2009 |
| | | | KR | 20090052271 A | 25-05-2009 |
| | | | TW | 200923519 A | 01-06-2009 |
| | | | US | 2009128759 A1 | 21-05-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110041421